(19) Europäisches Patentamt / European Patent Office / Office européen des brevets

(11) **EP 4 470 498 A1**

(12) **EUROPEAN PATENT APPLICATION**
published in accordance with Art. 153(4) EPC

(43) Date of publication:
04.12.2024 Bulletin 2024/49

(21) Application number: 23747269.1

(22) Date of filing: 20.01.2023

(51) International Patent Classification (IPC):
A61C 13/00 (2006.01)     A61C 13/083 (2006.01)
A61C 5/70 (2017.01)     C03C 10/00 (2006.01)
C03C 3/097 (2006.01)     C03C 3/085 (2006.01)
C03C 4/00 (2006.01)     C03B 11/12 (2006.01)

(52) Cooperative Patent Classification (CPC):
A61C 5/70; A61C 13/00; A61C 13/083;
C03B 11/12; C03C 3/085; C03C 3/097; C03C 4/00;
C03C 10/00

(86) International application number:
PCT/KR2023/001018

(87) International publication number:
WO 2023/146227 (03.08.2023 Gazette 2023/31)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 25.01.2022 KR 20220010460

(71) Applicant: Hass Co., Ltd.
Gangwon-do 25452 (KR)

(72) Inventors:
• LIM, Hyung Bong
  Ansan-si Gyeonggi-do 15521 (KR)
• KIM, Yong Su
  Gangneung-si Gangwon-do 25497 (KR)
• SON, Si Won
  Seoul 08846 (KR)
• LEE, Seong Eun
  Incheon 21090 (KR)

(74) Representative: Gulde & Partner
Patent- und Rechtsanwaltskanzlei mbB
Wallstraße 58/59
10179 Berlin (DE)

(54) **LARGE-AREA BLANK FOR PROSTHESIS FABRICATION AND METHOD FOR MANUFACTURING SAME**

(57) The present invention provides a large-area blank wherein no crystal-phase peak exists in the range of $2\theta$ 10-70, and the degree of crystallinity of 0.00% in an X-ray diffraction analysis pattern using $CuK\alpha$ rays, but crystalline particles having an average particle size of 10-70nm are confirmed to be distributed in an amorphous $SiO_2$-$Li_2O$-$Al_2O_3$-series glass matrix from an SEM-based analysis, and the blank has a long-axis length of at least 60 mm and a thickness of at least 6 mm. The present invention is advantageous as follows: the blank is a workpiece having a large area and excellent processability such that processability can be improved during cutting, thereby reducing tool resistance and wear ratio, and increasing the tool lifespan; edge chipping can be reduced during processing; when fabricating multiple dental restorations successively as needed by using a single blank, the blank use efficiency can be improved, and dental restoration productivity can be improved; high-strength dental restorations having different degrees of transparency can be manufactured from processed dental restorations through simple processes with different post heat treatment conditions; and dental restorations that implement various shades can be manufactured through a single blank, thereby contributing to circulation management simplification.

EP 4 470 498 A1

FIG. 2

**Description**

**Technical Field**

This present disclosure relates to a large-area blank from which multiple prostheses can be fabricated. More particularly, the present disclosure relates to a large-area blank with excellent machinability and to a method of manufacturing the same.

**Background Art**

Materials and methods for fabricating artificial teeth (monolithic dental crowns) using glass containing lithium disilicate crystals are disclosed in several patent documents. However, the conventional techniques have a problem in that direct machining is difficult since a crystalline phase for machining is coarse. For this reason, the conventional techniques require that a lithium metasilicate crystalline phase, which is machinable, be formed for ease of machining and then a high-strength lithium disilicate crystalline phase be formed through heat treatment after the machining. Therefore, the known techniques suffer poor dimensional accuracy of the machined products due to shrinkage occurring in the post-heat treatment process and are inconvenient due to the necessity of the additional heat treatment process. In general, prosthetic machining by CAD/CAM requires direct machining of a bulk body to fabricate a prosthesis in a dental clinic, and the fitting of the prosthesis to a patient as quickly as possible (one-day appointment). Therefore, a time delay due to the heat treatment process poses additional economic difficulties to patients and users.

In addition, a conventional lithium disilicate crystalline glass material has a limitation in realizing high light transmittance or opalescence similar to those of natural teeth due to the material's coarse crystalline phase.

In particular, to machine the conventional lithium disilicate crystalline glass material, a lithium metasilicate crystalline glass having good machinability is primarily prepared, and then lithium disilicate is prepared through a secondary crystallization heat treatment to improve strength. In this case, the size of a crystalline phase is about 3 um or more. However, in this state, machinability is remarkably lowered, and only the required strength may be realized.

To solve these problems, the present applicants have proposed a method of manufacturing a highly machinable crystalline glass that includes a lithium disilicate phase and a silicate crystalline phase, in which a primary heat treatment temperature is changed to control a crystal size, and the proposed method was granted a patent (Korean Patent No. 10-1975548). Specifically, the method includes: performing a primary heat treatment of a glass composition at a temperature in a range of 400°C to 850°C; and a secondary heat treatment at a temperature in a range of 780°C to 880°C after the first heat treatment. In the method, the glass composition, which is a material for manufacturing a crystalline glass, contains 60% to 83% by weight of $SiO_2$, 10% to 15% by weight of $Li_2O$, 2% to 6% by weight of $P_2O_5$ serving as a nucleating agent, 1% to 5% by weight of $Al_2O_3$ which functions to increase the glass transition point and the softening point and to improve the chemical durability of glass, 0.1% to 3% by weight of SrO which functions to increase the glass softening point, 0.1% to 2% by weight of ZnO, 1% to 5% by weight of a colorant, and 2.5% to 6% by weight of a mixture of $Na_2O$ and $K_2O$ which are alkali metal oxides functioning to increase the thermal expansion coefficient of glass. The primary heat treatment generates a lithium disilicate crystalline phase and a silica crystalline phase each having a nano size of 5 to 2000 nm. The secondary heat treatment temperature is controlled to adjust translucency. In addition, the crystalline glass obtained through the primary crystallization heat treatment is a material that contains a lithium disilicate crystalline phase having a crystalline size of 5 to 2000 nm and a precipitated silica crystalline phase and that can be mechanically machined in a lithium disilicate state. In terms of cutting force, it is preferable that the primary crystallization heat treatment is performed at a temperature in a range of 480°C to 800°C, and it is confirmed that a lithium disilicate phase having a size of 30 to 500 nm and a silica crystalline phase are formed through the primary heat treatment.

By using such lithium disilicate crystalline glass as a workpiece, it was possible to provide artificial teeth with improved physical properties and aesthetics through simple post-heat treatment while improving machinability in machining by consumer doctors or technicians. The workpiece herein was a blank in a form commonly referred to as a block. When the workpiece was one block form, and one prosthesis was obtained from the one block, desired results were obtained in terms of machinability. However, in practice, when a workpiece for use was a large-area blank, for example, a large-area blank with a diameter of 60 mm or more and a thickness of 6 mm or more, there has been a limitation of poor machinability at a machining degree equivalent to that at which a block is machined.

In particular, for a large-area blank, machinability is an important factor to teeth machining companies, which are major consumers, in fulfilling the companies' purposes for which such large-area blank is required. When machinability is not sufficiently good, the utilization efficiency of the large-area blank may decrease significantly, so that it is difficult to obtain the benefit of an increased-area blank.

In addition, when machinability is poor, large teeth machining companies (major consumers of the large-area blank) have to replace machining burs more frequently, which may reduce productivity.

As described above, even with the same material, there is a difference in machinability when a blank area gets increased. One of the reasons is the machining environment. When one prosthesis is obtained by machining one block, wet grinding may be performed. In the case of the large-area blank, multiple prostheses are required to be fabricated intermittently or sequentially from one blank depending on the time of need, so it is difficult to adopt the grinding method at the beginning of machining. Instead, a milling method is required to be used. This may be because the stress on the bur intensifies, and how the bur contacts the blank also changes.

Accordingly, the inventors of the present application have made great efforts in manufacturing a large-area blank that has excellent machinability and may be used to easily create a prosthesis that satisfies the mechanical properties and aesthetics of the prosthesis made from a lithium disilicate-based glass-ceramic as the main material.

Disclosure

**Technical Problem**

This present disclosure is to provide a large-area blank with excellent machinability.

This present disclosure is also to provide a method of manufacturing a large-area blank with excellent machinability by controlling heat treatment conditions using a predetermined glass composition.

This present disclosure is also to provide a method of manufacturing a prosthesis having a lithium disilicate-based crystal as the main crystal, controlled translucency, and realized high-strength, the method including machining a large-area blank to obtain a preliminary molded body and performing subsequent heat treatment.

**Technical Solution**

In one embodiment, this present disclosure provides a large-area blank which is confirmed to have no peak representing the crystalline phase within the $2\theta$ (degree) range of 10 to 70 and a crystallinity degree of 0.00% through an X-ray diffraction analysis pattern using CuK$\alpha$ rays, and confirmed to have a structure in which crystalline grains with a mean grain size of 10 to 70 nm are dispersed in the amorphous $SiO_2$-$Li_2O$-$Al_2O_3$-based glass matrix through an SEM analysis, the large-area blank having a long axis length of at least 60 mm and a thickness of at least 6 mm.

For the large-area blank according to another embodiment of this present disclosure, an amorphous bump-type main peak (amorphous bump) corresponding to the $SiO_2$-$Li_2O$-$Al_2O_3$-based glass matrix may be present in the $2\theta$ (degree) range of 21 to 22 in an X-ray diffraction analysis pattern using CuK$\alpha$ rays.

For the large-area blank according to this present disclosure, the large-area blank may have a long-axis length of 60 to 150 mm and a thickness of 6 to 20 mm.

For the large-area blank according to this present disclosure, the $SiO_2$-$Li_2O$-$Al_2O_3$-based glass matrix may contain 69.0% to 75.0% by weight of $SiO_2$, 12.0% to 14.0% by weight of $Li_2O$, 2.5% to 3.5% by weight of $Al_2O_3$, 0.12% to 0.22% by weight of ZnO, 1.1% to 2.7% by weight of $K_2O$, 0.1% to 0.3% by weight of $Na_2O$, and 2.0% to 6.0% by weight of $P_2O_5$.

The large-area blank with a thickness of 1.2 mm according to this present disclosure may have a light transmittance of at least 80% at a wavelength of 550 nm.

Preferably, the large-area blank with a thickness of 1.2 mm according to this present disclosure may have a light transmittance of 80% to 90% at a wavelength of 550 nm.

In addition, this present disclosure provides a method of manufacturing a large-area blank, the method including fabricating a preliminary blank of a predetermined shape with a long-axis length of at least 60 mm and a thickness of at least 6 mm by melting a glass composition containing 69.0% to 75.0% by weight of $SiO_2$, 12.0% to 14.0% by weight of $Li_2O$, 2.5% to 3.5% by weight of $Al_2O_3$, 0.12% to 0.22% by weight of ZnO, 1.1% to 2.7% by weight of $K_2O$, 0.1% to 0.3% by weight of $Na_2O$, and 2.0% to 6.0% by weight of $P_2O_5$, molding and cooling the melted glass composition in a mold, and annealing the cooled glass composition at a predetermined rate from a temperature of 465°C to a temperature of 280°C for 20 minutes to 2 hours; and

heat-treating the preliminary blank in a furnace heated from a starting temperature of 300°C to a maximum temperature of 400°C to 500°C for 1 hour to 24 hours.

In addition, this present disclosure provides a method of manufacturing a dental restoration, the method including manufacturing a predetermined dental restoration by cutting the large-area blank according to the embodiments; and

adjusting translucency of the dental restoration by heat-treating the dental restoration, in which the adjusting of translucency includes one or more steps selected from the group consisting of high translucency adjustment step in which heat treatment is performed for 5 to 30 minutes at a maximum temperature of 790°C or higher and lower than 810°C, medium translucency adjustment step in which heat treatment is performed for 5 to 30 minutes at a maximum temperature of 810°C or higher and lower than 825°C, low translucency adjustment step in which heat treatment is performed for 5 to 30 minutes at a maximum temperature of 825°C or higher and lower than 845°C, and medium opacity adjustment step in which heat treatment is performed for 5 to 30 minutes at a maximum temperature of 845°C or higher and 860°C.

In the method of manufacturing a dental restoration according to another embodiment of this present disclosure, the high translucency adjustment step may involve achieving an average light transmittance of 45% to 55%.

In the method of manufacturing a dental restoration according to another embodiment of this present disclosure, the medium translucency adjustment step may involve achieving an average light transmittance of 35% to 44%.

In the method of manufacturing a dental restoration according to another embodiment of this present disclosure, the low translucency adjustment step may involve achieving an average light transmittance of 18% to 34%.

In the method of manufacturing a dental restoration according to another embodiment of this present disclosure, the medium opacity adjustment step may involve achieving an average light transmittance of 13% to 17%.

In addition, this present disclosure provides a dental restoration obtained by the manufacturing method of the embodiment and with a biaxial flexural strength of at least 380 Mpa. The dental restoration is a glass ceramic body containing a crystalline phase in an amorphous glass matrix. The crystalline phase includes lithium disilicate, as a main crystalline phase, and one or more crystalline phases selected from the group consisting of cristobalite, tridymite, quartz, eucryptite, spodumene, virgilite, and a mixture thereof, as an additional crystalline phase.

In yet another embodiment, the dental restoration may be selected from the group consisting of crowns, inlays, onlays, and veneers.

**Advantageous Effects**

The large-area blank according to this present disclosure is a workpiece with a large area and excellent machinability. When the large-area blank is cut, machinability can be improved, tool resistance and wear rate can be reduced, tool life can be increased, and marginal chipping can be reduced. Using the large-area blank can improve blank utilization efficiency by manufacturing multiple dental restorations from one blank intermittently or sequentially as needed. Productivity can be improved in the manufacturing of dental restorations. Machined dental restorations can be manufactured into high-strength dental restorations with different translucency through a simple process with different post-heat treatment conditions. Accordingly, dental restorations of various shades can be manufactured from a single blank. Thus, this present disclosure is beneficial in contributing to streamlining logistics management.

**Description of Drawings**

FIG. 1 is a graph showing the results of an X-ray diffraction analysis of a large-area blank of this present disclosure;
FIG. 2 is a scanning electron microscope (SEM) photograph showing the microstructure and size of a crystalline phase of a large-area blank of this present disclosure;
FIG. 3 is a light transmittance graph for a large-area blank of the present disclosure; and
FIG. 4 is a comparative graph of cutting resistance for a large-area blank of this present disclosure.

**Best Mode**

The aforementioned and additional aspects of this present disclosure will become more apparent through preferred embodiments described with reference to the accompanying drawings. Hereinafter, these embodiments of this present disclosure will be described in detail so that those skilled in the art may easily understand and implement this .

In one embodiment, this present disclosure provides a large-area blank which is confirmed to have no peak representing the crystalline phase within the $2\theta$ (degree) range of 10 to 70 and a crystallinity degree of 0.00% through an X-ray diffraction analysis pattern using $CuK\alpha$ rays, and confirmed to have a structure in which crystalline grains with a mean grain size of 10 to 70 nm are dispersed in the amorphous $SiO_2$-$Li_2O$-$Al_2O_3$-based glass matrix through an SEM analysis, the large-area blank having a long axis length of at least 60 mm and a thickness of at least 6 mm.

In particular, for the large-area blank according to this present disclosure, an amorphous bump-type main peak (amorphous bump) corresponding to the $SiO_2$-$Li_2O$-$Al_2O_3$-based glass matrix may be present in a $2\theta$ (degree) range of 21 to 22, more specifically in a range of 21.9 to 22.0, in an X-ray diffraction analysis pattern using $CuK\alpha$ rays.

In the description above and below, X-ray diffraction analysis will be defined as an analysis result by using an X-ray diffraction analyzer (D/MAX-2500, Rigaku, Japan; $CuK\alpha$ (40 kV, 60 mA), scanning speed: 6°/min, $2\theta$: 10 to 70(degree), Rigaku, Japan).

In the description above and below, "crystallinity degree" may be defined as the ratio of the crystalline phase to an amorphous glass matrix. Crystallinity degree may be obtained through various methods, and in another embodiment of this present disclosure, crystallinity is defined as a value automatically calculated by the X-ray diffraction analysis defined above.

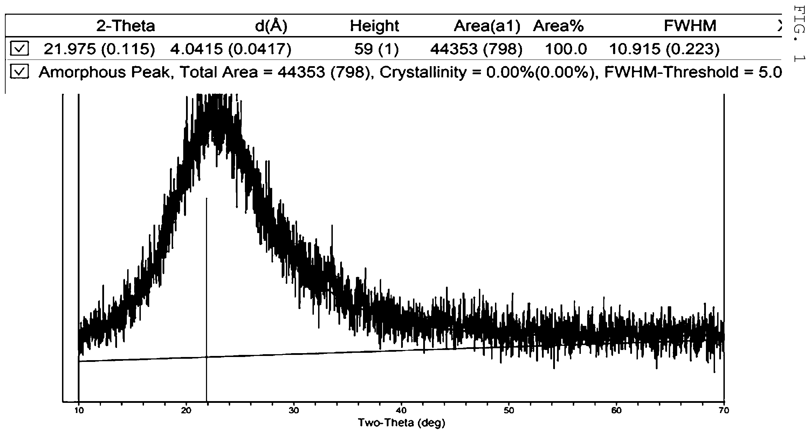

A graph of the XRD analysis results for the large-area blank according to yet another preferred embodiment may be the same as that shown in FIG. 1.

As shown in FIG. 1, in the case of the large-area blank according to this present disclosure, there is no crystalline peak within the $2\theta$ range of 10 to 70 in the X-ray diffraction analysis pattern, and a crystallinity degree is 0.00%.

From these results, it may be predicted that no crystalline phases exist in the resulting product containing an amorphous $SiO_2$-$Li_2O$-$Al_2O_3$-based glass matrix.

Typically, various crystalline phases may be present in a $SiO_2$-$Li_2O$-$Al_2O_3$-based glass matrix obtained from a glass matrix, for example, the various crystalline phases may include lithium phosphate, lithium (meta)silicate, lithium disilicate, cristobalite, tridymite, quartz, eucryptite, spodumene, and virgilite. In particular, a main crystalline phase may usually include lithium (meta)silicate or lithium disilicate.

However, in the case of the large-area blank according to this present disclosure, there is no crystalline peak other than an amorphous peak that may be defined as an amorphous $SiO_2$-$Li_2O$-$Al_2O_3$-based glass matrix, and the crystallinity degree related to a crystalline phase content is 0.00%. From these results, it may be predicted that the resulting product is a blank of pure amorphous glass with no crystalline phases at all. However, the large-area blank according to this present disclosure shows a different behavior from glass made only of an amorphous $SiO_2$-$Li_2O$-$Al_2O_3$-based glass matrix. This difference may be confirmed by the SEM analysis results.

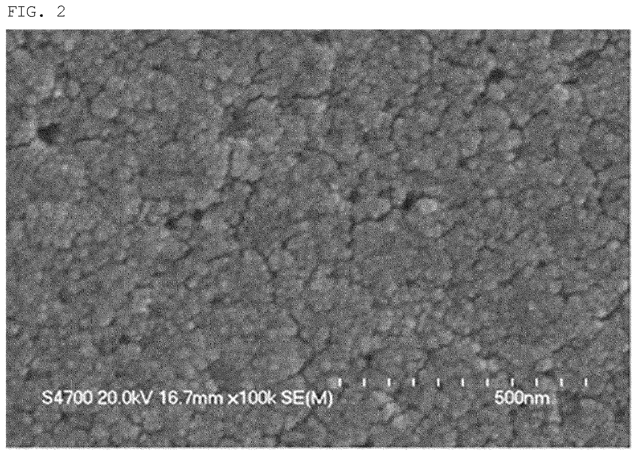

FIG. 2 is an SEM observation image ($\times$100K magnification) of the large-area blank of this present disclosure. FIG. 2 clearly shows the presence of grains.

From the SEM observation results shown in FIG. 2, it may be confirmed that grains with a mean grain size of 10 to 70 nm are dispersed.

By using the SEM photograph, it may be possible to infer the mean size of crystalline grains in the crystalline phases. Specifically, the mean size may be obtained by the linear intercept method. The method involves drawing diagonal or random straight lines on the SEM image, counting the number of crystalline phases that the straight line passes through, and dividing the number by the length of the straight line, in the process, magnification is taken into account.

In the description above and below, it will be understood that the mean size of the crystalline grains in the crystalline phases is calculated by this method.

For the large-area blank according to this present disclosure, the result of the X-ray diffraction analysis pattern shown in FIG. 1 and the SEM observation image shown in FIG. 2 are mutually aligned. It may be inferred that this characteristic occurred due to various cases. For example, the characteristic may be obtained in an initial crystallization of glass, in which low crystallinity appears or amorphous fine non-stoichiometric crystalline phases are formed. Accordingly, it may be inferred that despite fine grain observation in the SEM observation image shown in FIG. 2, no crystalline phase peaks are detected from the X-ray diffraction analysis pattern shown in FIG. 1, and in particular, the crystallinity degree is analyzed to be 0.00%. However, the mechanism for this characteristic is not limited thereto. The present inventors do not intend to limit the technical significance of the large-area blank of this present disclosure to this unidentified mechanism.

Likewise, due to the specific configuration related to the identification of mutually placed grains, the large-area blank of this present disclosure has a long-axis length of at least 60 mm and a thickness of at least 6 mm, but the large-area blank may be expected to exhibit excellent machinability in machining using milling equipment, especially in dry milling where multiple dental restorations are cut intermittently or sequentially as needed using one large-area blank.

In particular, as confirmed from the SEM observation image in FIG. 2, grains with a mean grain size of 10 to 70 nm are dispersed in the glass matrix. This indicates that the crystalline phase of the crystalline grains with such size is an extremely fine crystalline phase whose size is about 50 to 300 times smaller than conventional CAD/CAM workpieces (ingots or block products rather than large-area blanks) that usually use lithium metasilicate as the main crystalline phase. Thus, it may be inferred that such extremely fine crystalline phase had a significant impact on the machinability of the large-area blank.

In the description above and below, there is no limitation in the shape of the large-area blank. Due to no such shape limitations, the blank size is described on the basis of the long axis instead of the diameter. Considering the length and thickness of the long axis, the blank may have an external shape commonly referred to as a disk.

In yet another preferred embodiment of this present disclosure, the large-area blank has a long axis of 60 to 150 mm and a thickness of 6 to 20 mm. This may be desirable in that defect occurrence may be reduced in machining, and compatibility may be obtained in blank-mass machining.

Meanwhile, for the large-area blank according to yet another preferred embodiment of this present disclosure, an amorphous $SiO_2$-$Li_2O$-$Al_2O_3$-based glass matrix may preferably contain, specifically, 69.0% to 75.0% by weight of $SiO_2$, 12.0% to 14.0% by weight of $Li_2O$, 2.5% to 3.5% by weight of $Al_2O_3$, 0.12% to 0.22% by weight of $ZnO$, 1.1% to 2.7% by weight of $K_2O$, 0.1% to 0.3% by weight of $Na_2O$, and 2.0% to 6.0% by weight of $P_2O_5$. This is desirable in that the blank is even a large-area blank, but the machinability thereof is excellent and in that by machining the large-area blank and then using a simple heat treatment method, a dental restoration that satisfies the desired strength and aesthetics is created.

In addition, the large-area blank with a thickness of 1.2 mm according to this present disclosure may preferably have a light transmittance of at least 80% at a wavelength of 550 nm and preferably has a light transmittance of at least 80% to 90% at a wavelength of 550 nm. This is desirable in that the machinability of the blank is excellent, the translucency of the dental restoration obtained through machining may be easily controlled, and the desired aesthetics of the dental restoration may be satisfied. More specifically, it is desirable in that the large-area blank exhibiting such light transmittance is made by grains forming extremely fine crystalline phases, and the crystalline phases later have various sizes and show size distributions depending on temperature, so it is possible to provide dental restorations with various mechanical properties and translucency.

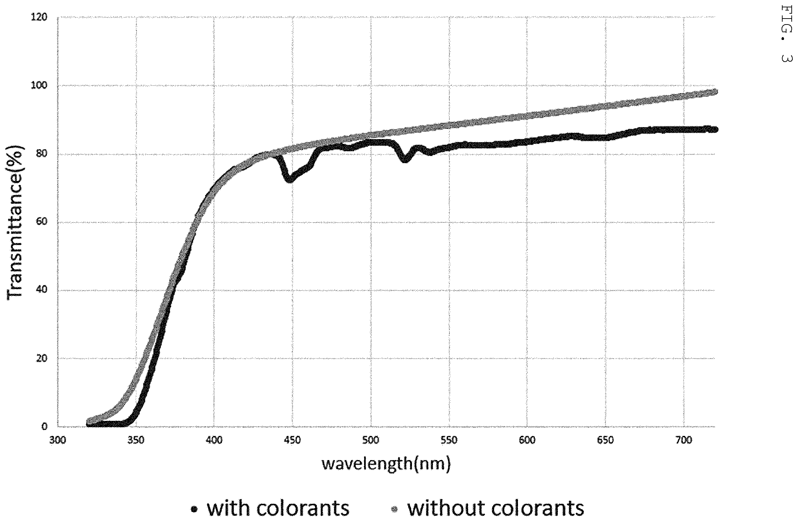

FIG. 3 shows a light transmittance graph of a large-area blank according to this present disclosure.

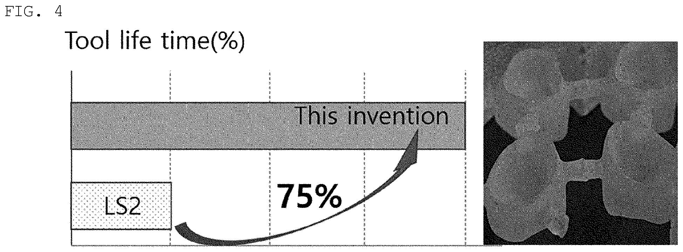

Characteristically, in the case of the large-area blank obtained according to this present disclosure, the machining tool-caused resistance may be significantly reduced in machining using a processing machine. As a specific embodiment, a large-area blank with the same properties as shown in FIGs. 1 and 2 was machined into a tooth premolar shape using a dental processing machine (PM-5, PISTIS, Korea), and the degree of tool wear was measured. This measurement result is shown in FIG. 4.

It was confirmed from the result of FIG. 4 that the large-area blank of this present disclosure had a large area, but the large-area blank allowed for a 75% improved tool life compared to the conventional large-area blanks of the same size (fabricated by using a block material of the inventor company), the conventional large-area blanks being made of a crystalline glass with lithium disilicate as the main crystalline phase. In addition, it was confirmed that the large-area blank of this present disclosure was machined without edge chipping.

Meanwhile, as described above about the large-area blank according to this present disclosure, the glass matrix of the large-area blank may contain 69.0% to 75.0% by weight of $SiO_2$, 12.0% to 14.0% by weight of $Li_2O$, 2.5% to 3.5% by weight of $Al_2O_3$, 0.12% to 0.22% by weight of $ZnO$, 1.1% to 2.7% by weight of $K_2O$, 0.1% to 0.3% by weight of $Na_2O$, and 2.0% to 6.0% by weight of $P_2O_5$. The glass composition that makes up this glass matrix goes through crystal nucleation and crystal growth heat treatment to precipitate crystalline phases in the amorphous glass matrix. The temperature at which crystal nucleation and crystal growth occur in the glass matrix is in a range of 400°C to 880°C. That is, a crystal nucleus begins to form at a minimum temperature of 400°C, and crystal growth occurs as the temperature rises. Due to this crystal growth, the glass matrix exhibits the lowest translucency at a maximum temperature of 880°C when the glass matrix is used for artificial teeth. That is, the translucency gradually decreases from the temperature at which the crystals begin to grow to a maximum temperature of 880°C. Considering this crystal growth pattern, when it is possible to obtain a bulk block by growing crystals that satisfy high strength and have a machinability level that allows machining, and then it is possible for translucency to be adjusted by taking into account the required fitting locations or the unique color of the patient's teeth through post-heat treatment under various conditions after machining is performed with the obtained bulk block, it may ultimately contribute to streamlining logistics management.

Natural teeth, as well as each tooth itself, have various translucency levels. The translucency required may vary depending on patients and fitting locations. When translucency changes depending on the heat treatment temperature may be realized in various ways as needed using a single bulk block, and artificial teeth that meet various aesthetic needs may be provided using a small number of workpieces. Moreover, multiple artificial teeth may be provided by using just one large-area blank. In that case, it may, of course, contribute dramatically to streamlining logistics management.

In this regard, this present disclosure provides a method of manufacturing a large-area blank, the method including fabricating a blank of a predetermined shape with a long-axis length of at least 60 mm and a thickness of at least 6 mm by melting a glass composition containing 69.0% to 75.0% by weight of $SiO_2$, 12.0% to 14.0% by weight of $Li_2O$, 2.5% to 3.5% by weight of $Al_2O_3$, 0.12% to 0.22% by weight of $ZnO$, 1.1% to 2.7% by weight of $K_2O$, 0.1% to 0.3% by weight of $Na_2O$, and 2.0% to 6.0% by weight of $P_2O_5$, molding and cooling the melted glass composition in a mold, and annealing the cooled glass composition at a predetermined rate from a temperature of 465°C to a temperature of 280°C for 20 minutes to 2 hours; and heat-treating the blank in a furnace heated from a starting temperature of 300°C to a maximum temperature of 400°C to 500°C for 1 hour to 24 hours.

In yet another specific embodiment of this present disclosure, first, the glass composition containing 69.0% to 75.0% by weight of $SiO_2$, 12.0% to 14.0% by weight of $Li_2O$, 2.5% to 3.5% by weight of $Al_2O_3$, 0.12% to 0.22% by weight of $ZnO$, 1.1% to 2.7% by weight of $K_2O$, 0.1% to 0.3% by weight of $Na_2O$, and 2.0% to 6.0% by weight of $P_2O_5$ is weighed and mixed.

For the glass composition, $Li_2CO_3$ may be added instead of $Li_2O$. Carbon dioxide ($CO_2$), which is the carbon (C) component of $Li_2CO_3$, is released as a gas during the glass melting process. Additionally, $K_2CO_3$ and $Na_2CO_3$ may be added instead of $K_2O$ and $Na_2O$ for the alkaline oxide, respectively. Carbon dioxide ($CO_2$), which is the carbon (C) component of $K_2CO_3$ and $Na_2CO_3$, is released as a gas during the glass melting process.

For mixing, a dry mixing process is used, and a ball milling process may be used as a dry mixing process. Looking at the ball milling process in detail, the starting raw materials are charged into a ball milling machine, and the ball milling machine is rotated at a constant speed to mechanically crush and mix the starting raw materials uniformly. Balls used in the ball milling machine may be made of ceramic materials such as zirconia or alumina, and the balls may all be the same size or have at least two different sizes. Ball size, milling time, and rotation speed per minute of the ball milling machine are adjusted, considering the target grain size. For example, considering a grain size, the ball size may be set in the range of about 1 to 30 mm, and the rotation speed of the ball milling machine may be set in the range of about 50 to 500 rpm. Ball milling is preferably performed for 1 to 48 hours, considering the target grain size. By ball milling, the starting raw materials are pulverized into fine-sized grains, have a uniform grain size, and are uniformly mixed at the same time.

The mixed starting raw materials are placed in a melting furnace, and the melting furnace containing the starting raw materials is heated to melt the starting raw materials. Herein, melting means that the starting raw materials are changed into materials with the viscosity of a liquid state from ones with the viscosity of a solid state. It is desirable for the melting furnace to be made of a material that has a high melting point, high strength, and a low contact angle to prevent the melt from sticking. For this, it is desirable for the melting furnace to be made of a material such as platinum (Pt), diamond-like-carbon (DLC), or chamotte, or for the surface of the melting furnace to be coated with a material such as platinum (Pt) or diamond-like-carbon (DLC).

Melting is preferably performed at a temperature in a range of 1,400°C to 2,000°C under atmospheric pressure for 1 to 12 hours. When the melting temperature is less than 1,400°C, the starting raw materials may not be melted yet. When the melting temperature is beyond 2,000°C, excessive energy consumption is required and is not economical, so it is desirable to perform melting in the temperature range. In addition, when the melting time is too short, the starting raw materials may not be sufficiently melted. When the melting time is too long, excessive energy consumption is required, which is not economical. The temperature increase rate of the melting furnace is preferably about 5°C/min to 50°C/min. When the temperature increase rate of the melting furnace is too slow, it takes a long time, and productivity decreases, and when the temperature increase rate of the melting furnace is too fast, the volatilization of starting raw materials increases due to a rapid temperature increase, which may result in poor physical properties of the crystallized glass. Therefore, it is desirable to raise the temperature of the melting furnace at a temperature increase rate in the range. Melting is preferably performed under an oxidizing atmosphere such as oxygen ($O_2$) or air.

A melt is poured into a designated mold to obtain a dental crystalline glass of the desired shape and size. It is desirable that the shaping mold be made of a material that has a high melting point, high strength, and a low contact angle to prevent the glass melt from sticking. For this, the shaping mold is desirable to be made of a material such as graphite or carbon, and to prevent thermal shock, and it is desirable to preheat the shaping mold to a temperature in a range of 200°C to 300°C and pour the melt into the shaping mold.

As the melt contained in the shaping mold is formed and cooled, it may be desirable for the melt to go through annealing at a predetermined rate from a temperature of 465°C to a temperature of 280°C for 20 minutes to 2 hours after the cooling process. At this time, the predetermined rate may preferably be in a range of 1.5°C/min to 10°C/min.

In this way, annealing reduces the stress deviation within the molded product, preferably annealing induces no stress to exist in the molded product, so it may have a desirable effect on controlling the size of the crystalline phases and improving the homogeneity of crystal distribution in the subsequent crystallization.

The molded product (preliminary blank with a long axis length of at least 60 mm and a thickness of at least 6 mm) that has gone through the annealing process is transferred to a crystallization heat treatment furnace to form a crystal nucleus and induce crystal growth to manufacture the desired crystallized glass.

At this time, the crystallization heat treatment is performed by heat-treating the blank in the furnace heated from a starting temperature of 300°C to a maximum temperature of 400 to 500°C for 1 to 24 hours, thereby it is possible to obtain a large-area blank which is confirmed to have no peak of the crystalline phase within the $2\theta$ range of 10 to 70, and a crystallinity degree of 0.00% through an X-ray diffraction analysis pattern using CuK$\alpha$ rays, and confirmed to have a structure in which crystalline grains with a mean grain size of 10 to 70 nm are dispersed in the amorphous $SiO_2$-$Li_2O$-$Al_2O_3$-based glass matrix through an SEM analysis; and the large-area blank has a long axis length of at least 60 mm and a thickness of at least 6 mm.

At this time, unlike the heat treatment for a blank in a furnace heated from a starting temperature of 300°C and reaching a maximum temperature of 400°C to 500°C for 1 to 24 hours, when a temperature range during heat treatment is higher than the mentioned temperature range or a heat treatment time is longer, this may be not preferable in that the machinability of the obtained large-area blank may be poor, and the light transmittance may be outside the desired range.

As mentioned above, this present disclosure provides the large-area blank which is confirmed to have no peak of the crystalline phase within the $2\theta$ range of 10 to 70, and a crystallinity degree of 0.00% through an X-ray diffraction analysis pattern using CuK$\alpha$ rays, and confirmed to have a structure in which crystalline grains with a mean grain size of 10 to 70 nm are dispersed in the amorphous $SiO_2$-$Li_2O$-$Al_2O_3$-based glass matrix in an SEM analysis; and the large-area blank had a long axis length of at least 60 mm and a thickness of at least 6 mm. The crystalline phases of the large-area blank may have various sizes and show size distributions depending on temperature and may have properties that enable various mechanical properties and translucency.

The large-area blank obtained through this method may exhibit properties in which the light translucency of the materials varies depending on the heat treatment temperature range.

The large-area blank is used as a workpiece for machining such as CAD/CAM machining. Conventional crystalline glass generally has a coarse crystal size, making it difficult to control translucency, and the strength thereof is also high, making machining difficult. Meanwhile, the large-area blank of this present disclosure contains extremely fine crystals, and these crystals may have various sizes and show size distributions depending on temperature, resulting in various physical properties and translucency. Accordingly, given this point, it is possible to manufacture a large-area blank from a single glass composition, machine the resulting large-area blank, and then control the translucency of the resulting product according to heat treatment conditions.

However, in the case of the large-area blank according to this present disclosure, since consideration is machinability, it may be desirable to pursue various realization of mechanical properties and translucency of the large-area blank after the large-area blank is manufactured into a dental restoration.

In this regard, this present disclosure provides a method of manufacturing a dental restoration, the method including manufacturing a predetermined dental restoration by cutting the large-area blank according to the embodiments; and adjusting translucency of the dental restoration by heat-treating the dental restoration, in which the adjusting of translucency includes one or more steps selected from the group consisting of high translucency adjustment step in which heat treatment is performed for 5 to 30 minutes at a maximum temperature of 790°C or higher and lower than 810°C, medium translucency adjustment step in which heat treatment is performed for 5 to 30 minutes at a maximum temperature of 810°C or higher and lower than 825°C, low translucency adjustment step in which heat treatment is performed for 5 to 30 minutes at a maximum temperature of 825°C or higher and lower than 845°C, and medium opacity adjustment step in which heat treatment is performed for 5 to 30 minutes at a maximum temperature of 845°C or higher and 860°C.

For example, a large-area blank is cut to obtain a predetermined tooth restoration, and then the tooth restoration is heat-treated for 5 to 30 minutes at a maximum temperature of 790°C or more and less than 810°C. Through the high translucency adjustment step, a mean light transmittance of 45% to 55% may be achieved. Dental restorations with such high translucency may be useful for inlays or onlays but are not limited thereto.

In the case of a large-area blank according to another embodiment of this present disclosure, heat treatment is performed for 5 to 30 minutes at a maximum temperature in the range of 810°C or more and less than 825°C. Through the medium translucency adjustment step, a mean light transmittance of 35% to 44% may be achieved. Dental restorations that satisfy this medium translucency may be useful for coloring purposes but are not limited thereto.

In the case of a large-area blank according to yet another embodiment of this present disclosure, heat treatment is performed for 5 to 30 minutes at a maximum temperature in the range of 825°C or more and less than 845°C. Through the low translucency adjustment step, a mean light transmittance of 18% to 34% may be achieved. This low translucency may be useful for applications such as posterior crowns but is not limited thereto.

In the case of a large-area blank according to yet another embodiment of this present disclosure, heat treatment is performed for 5 to 30 minutes at a maximum temperature in the range of 845°C or more and less than 860°C. Through the medium opacity adjustment step, a mean light transmittance of 13% to 17% may be achieved. Dental restorations with such medium opacity may be useful for purposes such as restoring discolored teeth but are not limited thereto.

In the description above and below, light transmittance was measured using a UV-visible spectrometer (UV-2401PC, Shimadzu, Japan).

In measuring the light transmittance of the large-area blank and dental restoration according to this present disclosure, the surface of the specimen was cleaned using ethanol, and measurement was conducted using a UV-visible spectrometer (UV-2401PC, Shimadzu, Japan). At this time, the measurement wavelength range was 300 to 800 nm, and the slit width was 2.0 nm. A mean light transmittance may be defined as the mean value of light transmittance values in the entire wavelength range. In the description above and below, light transmittance may be defined as a value based on a specimen thickness of 1.2 mm.

The dental restoration according to this present disclosure exhibits various light transmittances as described above through heat treatment after cutting, thereby multiple dental restorations may be provided from one blank. Moreover, it is possible to provide dental restorations with low to high translucency (including medium opacity), thereby more than 80 different shades may be obtained.

The dental restorations obtained in this way may be provided as various dental restorations whose translucency is adjusted depending on the fitting location or patient.

As a result, it is possible to provide dental restorations that may withstand the occlusal force of the posterior teeth and have improved aesthetics by realizing various translucency.

According to this present disclosure, through this manufacturing method, it is possible to obtain a dental restoration with a biaxial flexural strength of at least 380 Mpa. The dental restoration is a glass ceramic body containing a crystalline phase in an amorphous glass matrix. The crystalline phase includes lithium disilicate, as a main crystalline phase, and one or more crystalline phases selected from the group consisting of cristobalite, tridymite, quartz, eucryptite, spodumene, virgilite, and a mixture thereof, as an additional crystalline phase.

In the description above and below, the term main crystalline phase may be defined as a crystalline phase that accounts for at least 80% by weight of the total crystalline phase. The term additional crystalline phase may be defined as the remaining crystalline phase, which is not the main crystalline phase, among all crystalline phases.

The crystalline phase content may be calculated through X-ray diffraction analysis. For example, in a specimen made of two polymorphic phases a and b, the ratio $F_a$ of crystalline phase a is quantitatively expressed by Equation 1 below.

<Equation 1>

$$F_a = \frac{1}{1 + K\left(\frac{I_b}{I_a}\right)}$$

This value may be obtained by measuring the strength ratio of the two crystalline phases and obtaining the constant K. K is the absolute strength ratio $I_{oa}/I_{ab}$ of two pure polymorphs, which is obtained by measuring a standard material.

In the description above and below, the term main crystalline phase may be defined as being set on the basis of the content calculated according to this method.

The biaxial flexure strength herein is biaxial flexure strength based on ISO 6872.

To confirm the change in biaxial flexure strength depending on heat treatment conditions, specimens with a diameter of 11.9 mm and a thickness of 1.18 mm were manufactured from the large-area blank described above. Next, these specimens were post-heat treated under different heat treatment conditions to obtain individual specimens. The biaxial flexure strength of these specimens was measured in accordance with ISO 6872, and the results are shown in Tables 1 to 4 below.

In the following Tables 1 to 4, for specimens according to heat treatment conditions, HT represents a specimen obtained by heat treatment for 5 to 30 minutes at a maximum temperature in a range of 790°C to 810°C. MT represents a specimen obtained by heat treatment for 5 to 30 minutes at a maximum temperature in a range of 810°C to 825°C. LT represents a specimen obtained by heat treatment for 5 to 30 minutes at a maximum temperature in a range of 825°C to 845°C. MO represents a specimen obtained by heat treatment for 5 to 30 minutes at a maximum temperature in a range of 845°C to 860°C.

[Table 1]

| Specimens by heat treatment conditions | No. | Biaxial flexural strength (MPa) | Biaxial flexural strength mean value (MPa) |
|---|---|---|---|
| HT (High Translucency) | 1 | 494 | 505 |
| | 2 | 556 | |
| | 3 | 469 | |
| | 4 | 490 | |
| | 5 | 485 | |
| | 6 | 474 | |
| | 7 | 523 | |
| | 8 | 559 | |
| | 9 | 508 | |
| | 10 | 512 | |
| | 11 | 491 | |
| | 12 | 466 | |
| | 13 | 485 | |
| | 14 | 551 | |
| | 15 | 512 | |

[Table 2]

| Specimens by heat treatment conditions | No. | Biaxial flexural strength (MPa) | Biaxial flexural strength mean value (MPa) |
|---|---|---|---|
| MT (Medium Translucency) | 1 | 712 | 688.4 |

(continued)

| Specimens by heat treatment conditions | No. | Biaxial flexural strength (MPa) | Biaxial flexural strength mean value (MPa) |
|---|---|---|---|
| | 2 | 665 | |
| | 3 | 678 | |
| | 4 | 694 | |
| | 5 | 704 | |
| | 6 | 701 | |
| | 7 | 699 | |
| | 8 | 689 | |
| | 9 | 688 | |
| | 10 | 682 | |
| | 11 | 668 | |
| | 12 | 662 | |
| | 13 | 692 | |
| | 14 | 690 | |
| | 15 | 702 | |

[Table 3]

| Specimens by heat treatment conditions | No. | Biaxial flexural strength (MPa) | Biaxial flexural strength mean value (MPa) |
|---|---|---|---|
| LT (Low Translucency) | 1 | 531 | 636.2 |
| | 2 | 741 | |
| | 3 | 633 | |
| | 4 | 640 | |
| | 5 | 688 | |
| | 6 | 621 | |
| | 7 | 618 | |
| | 8 | 606 | |
| | 9 | 700 | |
| | 10 | 608 | |
| | 11 | 621 | |
| | 12 | 618 | |
| | 13 | 615 | |
| | 14 | 601 | |
| | 15 | 702 | |

[Table 4]

| Specimens by heat treatment conditions | No. | Biaxial flexural strength (MPa) | Biaxial flexural strength mean value (MPa) |
|---|---|---|---|
| MO (Medium Opacity) | 1 | 423 | 465.53 |
| | 2 | 506 | |

(continued)

| Specimens by heat treatment conditions | No. | Biaxial flexural strength (MPa) | Biaxial flexural strength mean value (MPa) |
|---|---|---|---|
| | 3 | 496 | |
| | 4 | 422 | |
| | 5 | 438 | |
| | 6 | 440 | |
| | 7 | 448 | |
| | 8 | 477 | |
| | 9 | 450 | |
| | 10 | 500 | |
| | 11 | 420 | |
| | 12 | 472 | |
| | 13 | 449 | |
| | 14 | 556 | |
| | 15 | 486 | |

As shown in Tables 1 to 4 above, in the case of the large-area blank according to this present disclosure, the strength may be controlled according to the conditions of post-heat treatment after cutting processing, and this strength may satisfy an appropriate level as a dental restoration.

In the description above and below, the dental restoration may be selected from the group consisting of crowns, inlays, onlays, and veneers but is not limited thereto.

This present disclosure has been described with reference to examples shown in the drawings, but this is merely illustrative, and those skilled in the art will understand that various modifications and other equivalent examples are possible therefrom.

**Industrial Applicability**

This present disclosure relates to a large-area blank capable of fabricating multiple prostheses from a single blank, and in particular, to a large-area blank with excellent machinability and a method of manufacturing the same.

The large-area blank according to this present disclosure is a workpiece with a large area and excellent machinability. When the large-area blank is cut, machinability may be improved, tool resistance and wear rate may be reduced, tool life may be increased, and marginal chipping may be reduced. Using the large-area blank may improve blank utilization efficiency by manufacturing multiple dental restorations from one blank intermittently or sequentially as needed. Productivity may be improved in the manufacturing of dental restorations. Machined dental restorations may be manufactured into high-strength dental restorations with different translucency through a simple process with different post-heat treatment conditions. Accordingly, dental restorations of various shades may be manufactured from a single blank. Thus, this present disclosure is beneficial in contributing to streamlining logistics management.

**Claims**

1.   A large-area blank confirmed to have no peak representing a crystalline phase within a 2θ (degree) range of 10 to 70 and a crystallinity degree of 0.00% through an X-ray diffraction analysis pattern using a CuKα ray, and confirmed to have a structure in which crystalline grains with a mean grain size of 10 to 70 nm are dispersed in an amorphous $SiO_2$-$Li_2O$-$Al_2O_3$-based glass matrix through an SEM analysis,
the large area blank having a long axis length of at least 60 mm and a thickness of at least 6 mm.

2.   The large-area blank of claim 1, wherein an amorphous bump-type main peak (amorphous bump) corresponding to the $SiO_2$-$Li_2O$-$Al_2O_3$-based glass matrix is present in a 2θ (degree) range of 21 to 22 in the X-ray diffraction analysis pattern using the CuKα ray.

3. The large-area blank of claim 1, wherein the large-area blank has a long axis length of 60 to 150 mm and a thickness of 6 to 20 mm.

4. The large-area blank of claim 1, wherein the $SiO_2$-$Li_2O$-$Al_2O_3$-based glass matrix contains 69.0% to 75.0% by weight of $SiO_2$, 12.0% to 14.0% by weight of $Li_2O$, 2.5% to 3.5% by weight of $Al_2O_3$, 0.12% to 0.22% by weight of ZnO, 1.1% to 2.7% by weight of $K_2O$, 0.1% to 0.3% by weight of $Na_2O$, and 2.0% to 6.0% by weight of $P_2O_5$.

5. The large-area blank of claim 1, wherein the large-area blank with a thickness of 1.2 mm exhibits a light transmittance of at least 80% at a wavelength of 550 nm.

6. The large-area blank of claim 1 or 5, wherein the large-area blank with a thickness of 1.2 mm has a light transmittance of 80% to 90% at a wavelength of 550 nm.

7. A method of manufacturing a large-area blank, the method comprising:

   fabricating a blank of a predetermined shape with a long-axis length of at least 60 mm and a thickness of at least 6 mm by melting a glass composition containing 69.0% to 75.0% by weight of $SiO_2$, 12.0% to 14.0% by weight of $Li_2O$, 2.5% to 3.5% by weight of $Al_2O_3$, 0.12% to 0.22% by weight of ZnO, 1.1% to 2.7% by weight of $K_2O$, 0.1% to 0.3% by weight of $Na_2O$, and 2.0% to 6.0% by weight of $P_2O_5$,
   molding and cooling the melted glass composition in a mold, and
   annealing the cooled glass composition at a predetermined rate from a temperature of 465°C to a temperature of 280°C for 20 minutes to 2 hours; and
   heat-treating the blank in a furnace heated from a starting temperature of 300°C to a maximum temperature of 400°C to 500°C for 1 hour to 24 hours.

8. A method of manufacturing a dental restoration, the method comprising:

   manufacturing a predetermined dental restoration by cutting the large-area blank of claim 1; and
   adjusting translucency of the dental restoration by heat-treating the dental restoration,
   wherein the adjusting of the light transmittance comprises one or more steps selected from the group consisting of a high translucency adjustment step in which heat treatment is performed for 5 to 30 minutes at a maximum temperature of 790°C or higher and lower than 810°C, a medium translucency adjustment step in which heat treatment is performed for 5 to 30 minutes at a maximum temperature of 810°C or higher and lower than 825°C, a low translucency adjustment step in which heat treatment is performed for 5 to 30 minutes at a maximum temperature of 825°C or higher and lower than 845°C, and a medium opacity adjustment step in which heat treatment is performed for 5 to 30 minutes at a maximum temperature of 845°C or higher and 860°C.

9. The method of claim 8, wherein the high translucency adjustment step involves achieving a mean light transmittance of 45% to 55%.

10. The method of claim 8, wherein the medium translucency adjustment step involves achieving a mean light transmittance of 35% to 44%.

11. The method of claim 8, wherein the low translucency adjustment step involves achieving a mean light transmittance of 18% to 34%.

12. The method of claim 8, wherein the medium opacity adjustment step involves achieving a mean light transmittance of 13% to 17%.

13. A dental restoration obtained by the method of any one of claims 8 to 12,

   wherein the dental restoration is a glass ceramic body containing a crystalline phase in an amorphous glass matrix,
   wherein the crystalline phase comprises lithium disilicate, as a main crystalline phase and one or more crystalline phases selected from the group consisting of cristobalite, tridymite, quartz, eucryptite, spodumene, and virgilite, and a mixture thereof, as an additional crystalline phase, and
   wherein the dental restoration has a biaxial flexural strength of at least 380 Mpa.

14. The dental restoration of claim 13, being selected from the group consisting of a crown, an inlay, an onlay, and a veneer.

FIG. 1

| | 2-Theta | d(Å) | Height | Area(a1) | Area% | FWHM | |
|---|---|---|---|---|---|---|---|
| ☑ | 21.975 (0.115) | 4.0415 (0.0417) | 59 (1) | 44353 (798) | 100.0 | 10.915 (0.223) | |
| ☑ | Amorphous Peak, Total Area = 44353 (798), Crystallinity = 0.00%(0.00%), FWHM-Threshold = 5.0 | | | | | | |

Two-Theta (deg)

FIG. 2

FIG. 3

FIG. 4

Tool life time(%)

## INTERNATIONAL SEARCH REPORT

| International application No. |
|---|
| **PCT/KR2023/001018** |

### A.    CLASSIFICATION OF SUBJECT MATTER

**A61C 13/00**(2006.01)i; **A61C 13/083**(2006.01)i; **A61C 5/70**(2017.01)i; **C03C 10/00**(2006.01)i; **C03C 3/097**(2006.01)i; **C03C 3/085**(2006.01)i; **C03C 4/00**(2006.01)i; **C03B 11/12**(2006.01)i

According to International Patent Classification (IPC) or to both national classification and IPC

### B.    FIELDS SEARCHED

Minimum documentation searched (classification system followed by classification symbols)

A61C 13/00(2006.01); A61K 6/02(2006.01); A61K 6/831(2020.01); A61K 6/833(2020.01); C03C 10/00(2006.01); C03C 3/097(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 블랭크(blank), 치과(dental), 인공치아(monolithic dental crown), 노(furnace), 절삭 (milling), 리튬 디실리케이트(Lithium disilicate), 이산화규소(SIO2), 산화리튬(Li2O), 산화알루미늄(Al2O3)

### C.    DOCUMENTS CONSIDERED TO BE RELEVANT

| Category* | Citation of document, with indication, where appropriate, of the relevant passages | Relevant to claim No. |
|---|---|---|
| A | KR 10-2020-0137198 A (HASS CORPORATION) 09 December 2020 (2020-12-09)<br>See abstract; paragraphs [0001]-[0002], [0028], [0037], [0043] and [0051]; and claims 1-13. | 1-14 |
| A | KR 10-2018-0018929 A (HASS CORPORATION) 22 February 2018 (2018-02-22)<br>See paragraph [0022]. | 1-14 |
| A | KR 10-2020-0118375 A (IVOCLAR VIVADENT AG) 15 October 2020 (2020-10-15)<br>See entire document. | 1-14 |
| A | KR 10-2127542 B1 (IVOCLAR VIVADENT AG) 29 June 2020 (2020-06-29)<br>See entire document. | 1-14 |
| A | WO 2013-167722 A1 (IVOCLAR VIVADENT AG) 14 November 2013 (2013-11-14)<br>See entire document. | 1-14 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **17 May 2023** | **17 May 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/001018**

| Patent document cited in search report | | | Publication date (day/month/year) | Patent family member(s) | | | Publication date (day/month/year) |
|---|---|---|---|---|---|---|---|
| KR | 10-2020-0137198 | A | 09 December 2020 | AU | 2019-448021 | A1 | 23 December 2021 |
| | | | | BR | 112021023578 | A2 | 08 February 2022 |
| | | | | CN | 110590163 | A | 20 December 2019 |
| | | | | EP | 3744696 | A1 | 02 December 2020 |
| | | | | JP | 2020-193191 | A | 03 December 2020 |
| | | | | JP | 6986285 | B2 | 22 December 2021 |
| | | | | US | 11104600 | B2 | 31 August 2021 |
| | | | | US | 2020-0377403 | A1 | 03 December 2020 |
| | | | | WO | 2020-241974 | A1 | 03 December 2020 |
| KR | 10-2018-0018929 | A | 22 February 2018 | KR | 10-1975547 | B1 | 08 May 2019 |
| KR | 10-2020-0118375 | A | 15 October 2020 | CN | 111792847 | A | 20 October 2020 |
| | | | | EP | 3718980 | A1 | 07 October 2020 |
| | | | | ES | 2926479 | T3 | 26 October 2022 |
| | | | | JP | 2020-169118 | A | 15 October 2020 |
| | | | | US | 2020-0317561 | A1 | 08 October 2020 |
| KR | 10-2127542 | B1 | 29 June 2020 | CA | 2898793 | A1 | 21 August 2014 |
| | | | | CN | 105008298 | B | 15 May 2018 |
| | | | | EP | 2765119 | A1 | 13 August 2014 |
| | | | | EP | 2765119 | B1 | 28 July 2021 |
| | | | | ES | 2894961 | T3 | 16 February 2022 |
| | | | | JP | 2016-514078 | A | 19 May 2016 |
| | | | | JP | 6198852 | B2 | 20 September 2017 |
| | | | | MX | 2015010390 | A | 29 October 2015 |
| | | | | US | 10064708 | B2 | 04 September 2018 |
| | | | | WO | 2014-124879 | A1 | 21 August 2014 |
| WO | 2013-167722 | A1 | 14 November 2013 | BR | 112014027613 | A2 | 27 June 2017 |
| | | | | CA | 2872146 | A1 | 14 November 2013 |
| | | | | CN | 104334509 | A | 04 February 2015 |
| | | | | EP | 2847140 | A1 | 18 March 2015 |
| | | | | HK | 1202521 | A1 | 02 October 2015 |
| | | | | IN | 9497DEN2014 | A | 17 July 2015 |
| | | | | JP | 2015-515897 | A | 04 June 2015 |
| | | | | KR | 10-2018937 | B1 | 05 September 2019 |
| | | | | MX | 2014013673 | A | 11 May 2015 |
| | | | | RU | 2014150037 | A | 10 July 2016 |
| | | | | RU | 2612707 | C2 | 13 March 2017 |
| | | | | US | 10206761 | B2 | 19 February 2019 |

Form PCT/ISA/210 (patent family annex) (July 2022)

## EP 4 470 498 A1

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 101975548